# EUROPÄISCHE PATENTSCHRIFT

(11) **EP 3 317 559 B1**
(45) Veröffentlichungstag und Bekanntmachung des Hinweises auf die Patenterteilung: **12.06.2019**
(21) Anmeldenummer: 16729250.7
(22) Anmeldetag: 13.06.2016
(51) Int. Cl.: F16F 9/38, F16F 9/36, F16F 9/18, F16F 9/46, F16F 9/32, F16F 9/06

(54) **HYDRAULISCHER SCHWINGUNGSDÄMPFER**
HYDRAULIC VIBRATION DAMPER
AMORTISSEUR DE VIBRATION HYDRAULIQUE

(30) Priorität: 02.07.2015 DE 102015212404
(43) Veröffentlichungstag der Anmeldung: 09.05.2018
(73) Patentinhaber: Volkswagen Aktiengesellschaft, 38440 Wolfsburg (DE)
(72) Erfinder: WAHL, Stephan, 38154 Königslutter (DE); SCHREINER, Marco, 38120 Braunschweig (DE); SCHLEGEL, Jan-Rickmer, 38179 Groß Schwülper (DE)
(86) Internationale Anmeldenummer: PCT/EP2016/063450
(87) Internationale Veröffentlichungsnummer: WO 2017/001174

(56) Entgegenhaltungen:
- EP-A2- 0 322 608
- FR-A- 1 136 853
- FR-A1- 2 560 324
- US-A- 4 303 231

## Beschreibung

Die Erfindung bezieht sich auf einen hydraulischen Schwingungsdämpfer mit den Merkmalen gemäß dem Oberbegriff von Anspruch 1.

Ein solcher Schwingungsdämpfer ist beispielsweise aus der FR 2 560 324 A1 bekannt.

Hydraulische Schwingungsdämpfer werden beispielsweise in Radaufhängungen von Kraftfahrzeugen eingesetzt, um Achskomponenten gegenüber dem Fahrzeugaufbau abzustützen und deren Bewegung zu dämpfen.

Über Schalt- und Steuersysteme unter Einbeziehung unter anderem eines elektrisch ansteuerbaren Ventils am Kolben des Schwingungsdämpfers lässt sich das Dämpfungsverhalten eines solchen Schwingungsdämpfers in der Zug- und Druckstufe beeinflussen, indem mittels des elektrisch ansteuerbaren Ventils das Überströmverhalten eines in dem Innenrohr befindlichen Dämpfermediums zwischen den Arbeitskammern verändert wird.

Ein alternativer, technisch weiter entfernter Schwingungsdämpfer ist beispielsweise aus DE 100 20 778 A1 bekannt.

Im Vergleich zu passiven Ventilen benötigen elektrisch ansteuerbare Ventile am Kolben deutlich mehr Bauraum in axialer und radialer Richtung. Dies führt bei gleichen Außenabmessungen zu einem kleineren Kolbenhub. Durch eine größere Dämpferbaulänge sowie einen größeren Dämpferdurchmesser kann dies zwar ausgeglichen werden. Jedoch ist dies im Hinblick auf eine beengte Einbausituation im bereich einer Radaufhängung eines Kraftfahrzeugs ungünstig. Zudem nimmt hierdurch auch wegen der größeren benötigten Ölmenge das Bauteilgewicht zu.

Der Erfindung liegt die Aufgabe zugrunde, einen besonders kompakten semi-aktiven hydraulischen Schwingungsdämpfer zu schaffen.
Diese Aufgabe wird durch einen hydraulischen Schwingungsdämpfer gemäß Patentanspruch 1 gelöst.

Durch eine derartige Anordnung des Dichtungselements wird ein maximaler Kolbenhub ermöglicht, welcher es gestattet, die Abmessungen eines semi-aktiven Schwingungsdämpfers und damit dessen Gewicht gering zu halten.

Zudem wird hierdurch die Abstützbasis des Dämpfers, d.h.der minimale Abstand I zwischen dem Dichtungselement am Kolben und der Führungsbuchse der Kolbenstangenführung vergrößert. Hierdurch wird die Bauteilfestigkeit insbesondere im Hinblick auf die Übertragung von Brems- und Seitenkräften zwischen dem Kolbenventil und dem Innenrohr erhöht.

Weiterhin steht mehr radialer Bauraum für das elektrisch ansteuerbare Ventil am Kolben zur Verfügung.

Vorteilhafte Ausgestaltungen der Erfindung sind Gegenstand weiterer Patentansprüche.

So kann beispielsweise der Kolben einen Ringabschnitt aufweisen, der in der besagten Betriebsstellung in einen das Bodenventil radial umgebenden Abschnitt der zweiten Kammer hineinragt oder aufgenommen ist, wobei das Dichtungselement mindestens einen Dichtungsring umfasst, der am Außenumfang des Ringabschnitts angeordnet ist.
Dadurch, dass der Kolben an seiner zu dem Bodenventil weisenden Stirnseite einen Deckel aufweist, wobei das Dichtungselement an dem Deckel angeordnet ist, kann auf einfache Art und Weise eine gute Anpassung an die Kontur des Bodenventils und damit eine gute Raumausnutzung erzielt werden.

Gemäß einer ersten erfindungsgemäßen Alternative kann der Kolben ein Ventilgehäuse umfassen, welches das elektrisch ansteuerbare Ventil aufnimmt, wobei der Deckel an dem Ventilgehäuse befestigt ist. Da das Dichtungselement am Deckel festgelegt ist, werden Strukturen zur Aufnahme des Dichtungselements am Ventilgehäuse nicht benötigt.

Hierdurch kann das Ventilgehäuse mit geringer Wanddicke ausgeführt werden, so dass radial mehr Bauraum für das elektrisch ansteuerbare Ventil zur Verfügung steht. Zudem vereinfacht sich dessen Herstellung.

Hierfür ist es ferner von Vorteil, wenn das Dichtungselement und das elektrisch ansteuerbare Ventil in Axialrichtung voneinander beabstandet angeordnet sind.

Zur Vereinfachung der Montage ist gemäß der ersten erfindungsgemäßen Alternative das elektrisch ansteuerbare Ventil mittels des Deckels in dem Ventilgehäuse festgelegt. Dazu kann der Deckel stirnseitig in das Ventilgehäuse eingeschraubt sein. Jedoch ist auch eine andere Art und Weise der Befestigung möglich.

Gemäß einer zweiten erfindungsgemäßen Alternative weist der Kolben eine Ventileinheit mit dem elektrisch ansteuerbaren Ventil auf. Dabei ist die Ventileinheit mittels des Deckels an einer Kolbenstange befestigt, wodurch sich ein besonders einfacher Montageablauf ergibt.

Nachfolgend wird die Erfindung anhand eines in der Zeichnung dargestellten Ausführungsbeispiels näher erläutert. Die Zeichnung zeigt in:

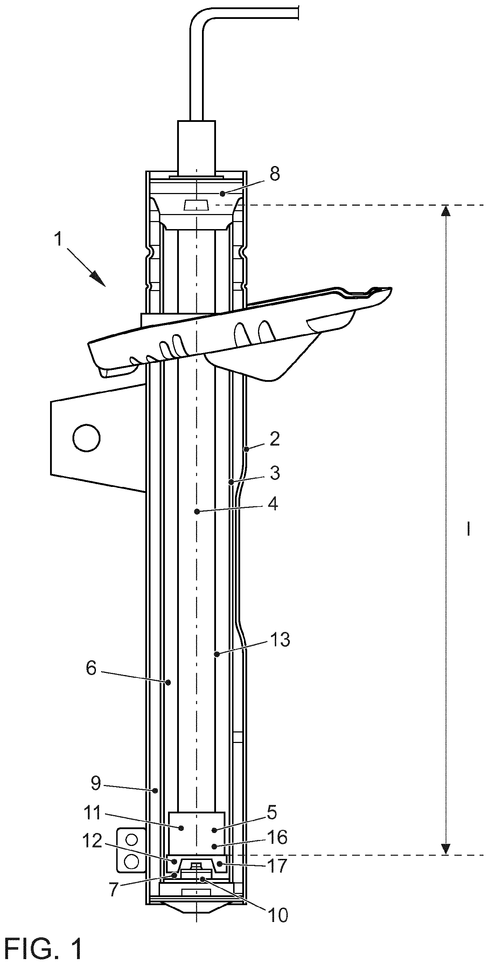

- Figur 1: einen hydraulischen Schwingungsdämpfer nach einem Ausführungsbeispiel der Erfindung,
- Figur 2: eine Detailansicht des Kolbens des hydraulischen Schwingungsdämpfers gemäß Figur 1 bei maximal eingefahrenem Kolben am Ende der Druckstufe, und in
- Figur 3: eine Abwandlung des Kolbens.

Das in den Figuren dargestellte Ausführungsbeispiel zeigt einen hydraulischen Schwingungsdämpfer 1, der beispielhaft als Zweirohrdämpfer für eine Kraftfahrzeugradaufhängung ausgebildet ist.

Der Schwingungsdämpfer 1 umfasst einen vorzugsweise rohrförmig ausgebildeten Behälter 2, in den ein Innenrohr 3 eingesetzt ist. Das Innenrohr 3 ist zylindrisch ausgebildet und an seinem unteren Ende verschlossen. In das Innenrohr 3 erstreckt sich eine Kolbenstange 4 mit einem an der Innenwand des Innenrohrs 3 geführten und gegen diese abdichtenden Kolben 5. Der Kolben 5 unterteilt einen Arbeitsraum innerhalb des Innenrohrs 3 in eine erste Arbeitskammer 6 und eine zweite Arbeitskammer 7, die jeweils mit einem Dämpfungsmedium wie beispielsweise einem Hydrauliköl gefüllt sind. Zur Begrenzung der oberen ersten Arbeitskammer 6 ist das Innenrohr 3 durch eine Kolbenstangenführung 8 verschlossen, die sich an einem oberen Stirnende des Innenrohrs 3 abstützt. Die Kolbenstangenführung 8 weist eine Öffnung für die Kolbenstange 4 auf. Zudem ist im Bereich der Kolbenstange 4 an der Kolbenstangenführung 8 eine ebenfalls nicht näher dargestellte Gleitdichtung vorgesehen.

Die untere zweite Arbeitskammer 7 ist axial durch ein Bodenventil 10 verschlossen, das an das untere Stirnende des Innenrohrs 3 angesetzt ist, wodurch sich eine besonders schlanke Bauweise ergibt.

Zwischen der Innenwand des Behälters 2 und der Außenwand des Innenrohrs 3 wird eine Ausgleichskammer 9 gebildet, welche über das Bodenventil 10 mit der zweiten Arbeitskammer 7 in Verbindung steht. Über das Bodenventil 10 wird vor allem die durch die Kolbenstange 4 bedingte Volumenänderung im Innenraum des Innenrohrs 3 ausgeglichen.

Weiterhin umfasst der hydraulische Schwingungsdämpfer 1 zwischen den Arbeitskammern 6 und 7 angeordnete Ventile, über deren Öffnungsverhalten in Verbindung mit dem Bodenventil 10 die Charakteristik des hydraulischen Schwingungsdämpfers 1 in der Zug- und Druckstufe eingestellt wird. Unter Zugstufe wird vorliegend ein Zustand verstanden, bei dem die Kolbenstange 4 mit dem Kolben 5 in Richtung aus dem Innenrohr 3 heraus bewegt wird. Hierbei steigt der Druck in der ersten Arbeitskammer 6 an, während der Druck in der zweiten Arbeitskammer 7 abfällt. Die Druckstufe ist hingegen durch ein Einschieben der Kolbenstange 4 in das Innenrohr 3 mit umgekehrten Druckverhältnissen gekennzeichnet.

Insbesondere ist an dem Kolben 5 mindestens ein elektrisch ansteuerbares Ventil 11 angeordnet, das über die Kolbenstange 4 mit Strom versorgt wird. Dieses elektrisch ansteuerbare Ventil 11 kann beispielsweise als Schalt- und/oder Regelventil zur Beeinflussung des Strömungsverhaltens des Dämpfungsmediums ausgeführt sein. Es gestattet vorzugsweise eine Druck- und/oder Volumenstromregelung und kann beispielsweise als Proportionalmagnetventil ausgebildet sein.

Der Kolben 5 stützt sich über ein Dichtungselement 12 am Innenrohr 3 ab und ist über dieses Dichtungselement 12 an der Innenwand des Innenrohrs 3 axial gleitbewegbar geführt.
Das Dichtungselement 12, welches gegen das Innenrohr 3 anliegt, dichtet die erste und zweite Arbeitskammer 6 und 7 gegeneinander ab, damit kein Dämpfungsmedium außen am Kolben 5 vorbeiströmen kann.

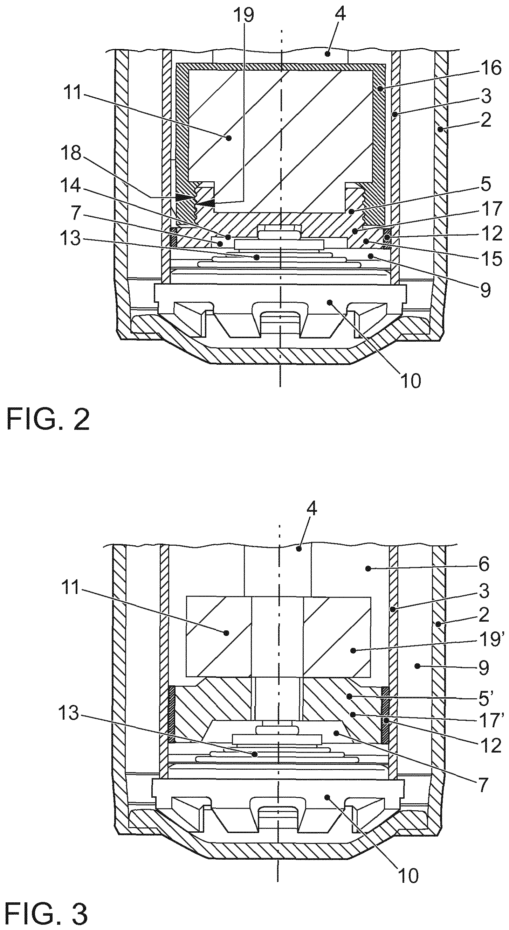

Wie insbesondere Fig. 2 zeigt, ragt das Bodenventil 10 mit einem Abschnitt 13 axial in die zweite Arbeitskammer 7 hinein. Dieser Abschnitt 13 ist in Radialrichtung von Dämpfungsmedium der zweiten Arbeitskammer 7 umgeben. Die zu dem Bodenventil 10 weisende Stirnseite des Kolbens 5 ist derart an den vorspringenden Abschnitt 13 angepasst, dass in einer Betriebsstellung des Kolbens 5, vorliegend bei maximal eingefahrenem Kolben 5 am Ende der Druckstufe (vgl. Fig. 2), der Kolben 5 den in die zweite Arbeitskammer 7 hineinragenden Abschnitt 13 des Bodenventils 10 radial umgibt. Hierzu weist der Kolben 5 an seiner Stirnseite mittig eine entsprechende Ausnehmung 14 auf. In dieser Betriebsstellung liegt das Dichtungselement 12 auf Höhe des Bodenventils 10.

Insbesondere weist der Kolben 5 einen Ringabschnitt 15 auf, der in der in Fig. 2 dargestellten Betriebsstellung in einen das Bodenventil 10 radial umgebenden Abschnitt der zweiten Arbeitskammer 7 zumindest hineinragt. Das Dichtungselement 12, welches mindestens einen Dichtungsring umfasst, ist dabei am Außenumfang des Ringabschnitts 15 angeordnet, welcher die mittige Ausnehmung 14 umgibt.

Bei dem in Fig. 2 dargestellten Ausführungsbeispiel weist der Kolben 5 ein Ventilgehäuse 16 zur Aufnahme des elektrisch ansteuerbaren Ventils 11 sowie einen Deckel 17 auf. Der Deckel 17 ist dabei an der zu dem Bodenventil 10 weisenden Stirnseite des Kolbens 5 angeordnet. Über den Deckel 17 kann das elektrische ansteuerbare Ventil 11 in dem Ventilgehäuse 16 festgelegt sein. Zudem sitzt das Dichtungselement 12 lediglich an dem Deckel 17. Da das Dichtungselement 12 von dem elektrisch ansteuerbaren Ventil 11 axial beabstandet ist, kann das Ventilgehäuse 17 dünnwandig ausgeführt werden und wird radial nicht durch den für das Dichtungselement 12 benötigten Platz eingeschränkt. Das Ventilgehäuse 17 kann daher als außen im Wesentlichen zylindrischer Körper ausgeführt werden, dessen Außendurchmesser nur geringfügig kleiner ist als der Innendurchmesser des Innenrohrs 3, so dass zwischen diesen ein ringsförmiger Spalt bestehen bleibt. Zudem steht für das Dichtungselement 12 radial mehr Platz zur Verfügung, so dass dieses besser optimiert werden kann.

Der Deckel 17 kann stirnseitig in das Ventilgehäuse 17 eingeschraubt sein und weist hierzu einen Außengewindeabschnitt 18 auf, der mit einem Innengewindeabschnitt 19 am Ventilgehäuse 16 in Eingriff steht. Jedoch kann hier auch eine andere Art und Weise der Befestigung vorgesehen werden.

Die Ausgestaltung des Kolbens 5 ist nicht auf die in Fig. 2 dargestellte Ausführung beschränkt. Insbesondere können der Deckel 17 und das Ventilgehäuse 11 auch zu einer Einheit zusammengefasst werden. Fig. 3 zeigt eine weitere Abwandlung. Hier weist der Kolben 5' eine Ventileinheit 20' mit dem elektrisch ansteuerbaren Ventil 11 auf. Dabei ist die Ventileinheit 19' mittels des Deckels 17' an der Kolbenstange 4 befestigt. Die Kolbenstange 4 kann sich hierbei durch die Ventileinheit 20' hindurcherstrecken. Der Deckel 17' kann beispielsweise mit der Kolbenstange 4 verschraubt, jedoch auch auf andere Art und Weise an desselben befestigt sein. Die Anordnung des Deckels 17' samt Dichtungselement 12 in Bezug auf das Bodenventil 10 entspricht der Ausführung gemäß Fig. 2.

Durch die vorstehend erläuterte bodenventilnahe Anordnung des Dichtungselements 12 mit radialer Überlappung mit dem Bodenventil 10 bei maximal eingefahrenem Kolben 5 wird bei kompakten Außenabmessungen des Dämpfers 1 ein maximaler Kolbenhub ermöglicht. Hierdurch ist es möglich, das Gewicht eines semi-aktiven Schwingungsdämpfers gering zu halten. Zudem ergibt sich eine lange Abstützbasis, welche sich positiv auf die Bauteilfestigkeit auswirkt. In der Serienfertigung ermöglicht die erfindungsgemäße Lösung zudem die Verwendung gleicher Bodenventile 10 und Innenrohre 3 für passive und semi-aktive Schwingungsdämpfer.

Die Erfindung wurde vorstehend anhand eines Ausführungsbeispiels und weiterer Abwandlungen näher erläutert. Insbesondere können technische Einzelmerkmale, welche oben im Kontext weiter Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist daher ausdrücklich nicht auf die beschriebenen Ausführungsbeispiele beschränkt, sondern umfasst alle durch die Patentansprüche definierten Ausgestaltungen.

### Bezugszeichenliste

- 1: hydraulischer Schwingungsdämpfer
- 2: Behälter
- 3: Innenrohr
- 4: Kolbenstange
- 5, 5': Kolben
- 6: erste Arbeitskammer
- 7: zweite Arbeitskammer
- 8: Kolbenstangenführung
- 9: Ausgleichsraum
- 10: Bodenventil
- 11: elektrisch ansteuerbares Ventil
- 12: Dichtungselement
- 13: Abschnitt des Bodenventils
- 14: Ausnehmung
- 15: Ringabschnitt I
- 16: Ventilgehäuse
- 17, 17': Deckel
- 18: Außengewindeabschnitt
- 19: Innengewindeabschnitt
- 20': Ventileinheit
- I: Abstützbasis

## Patentansprüche

1. Hydraulischer Schwingungsdämpfer, umfassend:
einen Behälter (2),
ein Innenrohr (3), das in dem Behälter (2) angeordnet ist,
einen Kolben (5), der in dem Innenrohr (2) axial bewegbar angeordnet ist und dessen Innenraum in eine erste Arbeitskammer (6) und eine zweite Arbeitskammer (7) unterteilt, ein Dichtungselement (12), über das der Kolben (5) gegen das Innenrohr (3) anliegt, um die erste und zweite Arbeitskammer (6, 7) gegeneinander abzudichten,
und
ein Bodenventil (10), das an einem axialen Endabschnitt des Innenrohrs (3) angeordnet ist, um die zweite Arbeitskammer (7) mit einem zwischen dem Behälter (2) und dem Innenrohr (3) gebildeten Ausgleichsraum (9) zu verbinden,
wobei
das Bodenventil (10) mit einem Abschnitt (13) axial in die zweite Arbeitskammer (7) hineinragt und der Kolben (5) eine Betriebsstellung aufweist, in der dieser den in die zweite Arbeitskammer (7) hineinragenden Abschnitt (13) des Bodenventils (10) radial umgibt, wobei das Dichtungselement (12) in dieser Betriebsstellung auf Höhe des Bodenventils (10) liegt,
**dadurch gekennzeichnet, dass**
der Kolben (5) an seiner zu dem Bodenventil (10) weisenden Stirnseite einen Deckel (17, 17') aufweist und das Dichtungselement (12) an dem Deckel (17,17') angeordnet ist, der hydraulische Schwingungsdämpfer ein elektrisch ansteuerbares Ventil (11) zur Verbindung der ersten und zweiten Arbeitskammer (6, 7) aufweist, das an dem Kolben (5) angeordnet ist, und
der Kolben (5') eine Ventileinheit (20') mit dem elektrisch ansteuerbaren Ventil (11) aufweist und die Ventileinheit (20') mittels des Deckels (17') an einer Kolbenstange (4) befestigt ist,
oder
der Kolben (5) ein Ventilgehäuse (16) umfasst, das das elektrisch ansteuerbare Ventil (11) aufnimmt und der Deckel (17) an dem Ventilgehäuse (16) befestigt ist,
wobei das elektrisch ansteuerbare Ventil (11) mittels des Deckels (17) in dem Ventilgehäuse (11) festgelegt ist.

2. Hydraulischer Schwingungsdämpfer nach Anspruch 1, **dadurch gekennzeichnet, dass** der Kolben (5) einen Ringabschnitt (15) aufweist, der in der besagten Betriebsstellung in einen das Bodenventil (10) radial umgebenden Abschnitt der zweiten Arbeitskammer (7) hineinragt oder in diesem aufgenommen ist und das Dichtungselement (12) mindestens einen Dichtungsring umfasst, der am Außenumfang des Ringabschnitts (15) angeordnet ist.

3. Hydraulischer Schwingungsdämpfer nach Anspruch 1 oder 2, **dadurch gekennzeichnet, dass** das Dichtungselement (12) und das elektrisch ansteuerbare Ventil (11) in Axialrichtung voneinander beabstandet angeordnet sind.

4. Hydraulischer Schwingungsdämpfer nach einem der voranstehenden Ansprüche, **dadurch gekennzeichnet, dass** der Deckel (17) stirnseitig in das Ventilgehäuse (16) eingeschraubt ist.

## Claims

1. Hydraulic vibration damper, comprising:
a tank (2),
an inner pipe (3) which is arranged in the tank (2),
a piston (5) which is arranged axially movably in the inner pipe (2) and divides the interior space of the latter into a first working chamber (6) and a second working chamber (7),
a seal element (12), via which the piston (5) bears against the inner pipe (3), in order to seal the first and second working chamber (6, 7) with respect to one another,
and
a bottom valve (10) which is arranged on an axial end section of the inner pipe (3), in order to connect the second working chamber (7) to a compensation space (9) which is formed between the tank (2) and the inner pipe (3),
the bottom valve (10) protruding axially with a section (13) into the second working chamber (7), and the piston (5) having an operating position, in which it radially surrounds that section (13) of the bottom valve (10) which protrudes into the second working chamber (7), the seal element (12) lying at the level of the bottom valve (10) in this operating position,
**characterized in that**
the piston (5) has a cover (17, 17') on its end side which points towards the bottom valve (10), and the seal element (12) is arranged on the cover (17, 17'),
the hydraulic vibration damper has an electrically actuable valve (11) for connecting the first and second operating chamber (6, 7), which valve (11) is arranged on the piston (5), and
the piston (5') has a valve unit (20') with the electrically actuable valve (11), and the valve unit (20') is fastened by means of the cover (17') to a piston rod (4),
or
the piston (5) comprises a valve housing (16) which receives the electrically actuable valve (11), and the cover (17) is fastened to the valve housing (16), the electrically actuable valve (11) being fixed by means of the cover (17) in the valve housing (11).

2. Hydraulic vibration damper according to Claim 1, **characterized in that** the piston (5) has a ring section (15) which, in the said operating position, protrudes into a section of the second working chamber (7), which section surrounds the bottom valve (10) radially, or is received therein, and the seal element (12) comprises at least one sealing ring which is arranged on the outer circumference of the ring section (15).

3. Hydraulic vibration damper according to Claim 1 or 2, **characterized in that** the sealing element (12) and the electrically actuable valve (11) are arranged spaced apart from one another in the axial direction.

4. Hydraulic vibration damper according to one of the preceding claims, **characterized in that** the cover (17) is screwed into the valve housing (16) on the end side.

## Revendications

1. Amortisseur de vibration hydraulique, comprenant:
un récipient (2),
un tube intérieur (3), qui est disposé dans le récipient (2),
un piston (5), qui est disposé de façon mobile axialement dans le tube intérieur (2) et qui divise l'espace intérieur de celui-ci en une première chambre de travail (6) et une seconde chambre de travail (7),
un élément d'étanchéité (12), par lequel le piston (5) s'applique contre le tube intérieur (3), afin de rendre la première et la seconde chambres de travail (6, 7) étanches l'une par rapport à l'autre, et
une soupape de fond (10), qui est disposée à une partie d'extrémité axiale du tube intérieur (3), afin de raccorder la seconde chambre de travail (7) à une chambre d'équilibrage (9) formée entre le récipient (2) et le tube intérieur (3),
dans lequel la soupape de fond (10) pénètre avec une partie (13) axialement dans la seconde chambre de travail (7) et le piston (5) présente une position de fonctionnement, dans laquelle celui-ci entoure radialement la partie (13) de la soupape de fond (10) pénétrant dans la seconde chambre de travail (7), dans lequel l'élément d'étanchéité (12) se situe dans cette position de fonctionnement à hauteur de la soupape de fond (10),
**caractérisé en ce que**
le piston (5) présente un couvercle (17, 17') sur son côté frontal tourné vers la soupape de fond (10) et l'élément d'étanchéité (12) est disposé sur le couvercle (17, 17'),
l'amortisseur de vibration hydraulique présente une soupape à commande électrique (11) pour le raccordement de la première et de la seconde chambres de travail (6, 7), qui est disposée sur le piston (5), et
le piston (5') présente une unité de soupape (20') avec la soupape à commande électrique (11) et l'unité de soupape (20') est fixée à une tige de piston (4) au moyen du couvercle (17'), ou
le piston (5) comprend un corps de soupape (16), qui contient la soupape à commande électrique (11) et le couvercle (17) est fixé au corps de soupape (16),
dans lequel la soupape à commande électrique (11) est fixée dans le corps de soupape (11) au moyen du couvercle (17) .

2. Amortisseur de vibration hydraulique selon la revendication 1, **caractérisé en ce que** le piston (5) présente une partie annulaire (15), qui dans ladite position de fonctionnement pénètre dans une partie de la seconde chambre de travail (7) qui entoure radialement la soupape de fond (10) ou est contenue dans celle-ci et l'élément d'étanchéité (12) comprend au moins un anneau d'étanchéité, qui est disposé sur la périphérie extérieure de la partie annulaire (15).

3. Amortisseur de vibration hydraulique selon une revendication 1 ou 2, **caractérisé en ce que** l'élément d'étanchéité (12) et la soupape à commande électrique (11) sont disposés à distance l'un de l'autre en direction axiale.

4. Amortisseur de vibration hydraulique selon l'une quelconque des revendications précédentes, **caractérisé en ce que** le couvercle (17) est vissé du côté frontal dans le corps de soupape (16).
